# EUROPEAN PATENT SPECIFICATION

(11) **EP 1 784 081 B1**
(45) Date of publication and mention of the grant of the patent: **12.05.2010**
(21) Application number: 05782674.5
(22) Date of filing: 04.08.2005
(51) Int. Cl.: A23F 3/14

(54) **PROCESS FOR MAKING TEA**
VERFAHREN ZUR ZUBEREITUNG VON TEE
PROCEDE DE PREPARATION DE THE

(30) Priority: 25.08.2004 GB 0418917
(43) Date of publication of application: 16.05.2007
(73) Proprietor: Unilever PLC, London EC4Y 0DY (GB); Unilever N.V., 3013 AL Rotterdam (NL)
(72) Inventor: JONES, Timothy Graham, Bedford, Bedfordshire MK44 1LQ (GB); SAFFORD, Richard, Bedford, Bedfordshire MK41 0RE (GB); PILLAI, Devamanohari, Bedford, Bedfordshire MK44 1LQ (GB)
(74) Representative: Hugot, Alain
(86) International application number: PCT/EP2005/008494
(87) International publication number: WO 2006/021317

(56) References cited:
- EP-A- 1 574 136
- GB-A- 893 551
- GB-A- 1 261 747
- DATABASE WPI Section Ch, Week 200029 Derwent Publications Ltd., London, GB; Class D13, AN 2000-337651 XP002357211 & RU 2 132 618 C1 (LISINENKO I V) 10 July 1999 (1999-07-10)
- DATABASE WPI Section Ch, Week 198949 Derwent Publications Ltd., London, GB; Class D13, AN 1989-360259 XP002357212 & JP 01 269450 A (MIYAKE E) 26 October 1989 (1989-10-26)
- DATABASE WPI Section Ch, Week 200215 Derwent Publications Ltd., London, GB; Class D13, AN 2002-106918 XP002357213 & CN 1 318 326 A (GUANGDONG HUACHENG FOOD CO LTD) 24 October 2001 (2001-10-24)

## Description

The present invention relates to a process for making amino acid-rich tea, in particular tea rich in theanine.

### BACKGROUND AND PRIOR ART

Tea is generally prepared as green leaf tea or black leaf tea. The method of preparing such teas is well known to those skilled in the art. Generally, to prepare black leaf tea, fresh green leaves of the plant *Camellia sinensis* are withered (subjected to mild drying), comminuted, fermented (in which process enzymes in the leaf tea use atmospheric oxygen to oxidise various substrates to produce brown-coloured products) and then fired (to dry the tea leaves). Green leaf tea is not exposed to the fermentation process. Partial fermentation may be used to produce intermediate-type teas known as "oolong" tea. Conventionally, a portion of the upper most part of the tea plant is harvested, which usually involves plucking a number of leaves (normally two to up to seven) together with a bud. Inevitably, some stem material is also plucked. This stem material is seen as a problem to leaf tea manufacturers because the consumer likes to see processed large leaf tea and does not like to see fibrous stem material. Therefore it is normal practice to remove stem from the process at some stage. Only in cheaper teas is stem material normally retained.

Today tea based beverages can be prepared by methods other than infusing leaves in hot water and served in ways other than poured from tea pots. For example they can be made with concentrates or powders that are mixed with hot water in vending machines or used to prepare ready to drink teas in cans and bottles. Consumers also demand more from tea such as accelerated infusion, more colour, more aroma.

In particular the modern consumer is particularly interested in naturally healthy beverages which form part of a modern healthy lifestyle. As a beverage, tea fits well with this attitude in view of its natural content of *inter alia* flavonoids, catechins and amino acids. There is therefore a need in the art to provide a method for the concentration of these naturally occurring healthy ingredients whilst maintaining the healthy nature of tea without adding synthetic compounds.

The present inventors have surprisingly discovered that stem material of the tea plant *camelia sinensis* contains a higher concentration of amino acids than the leaf material. Thus, by using a suitable tea manufacturing process, the content of naturally occurring amino acids can be increased by selective processing of the stem material.

RU 2 132 618 C1 discloses a beverage which contains tea extract prepared by extracting black tea and/or green tea and/or the coarse stalks of black and green tea.

M.Gürü and H.içen, Bioresource Technology, 2004, 94, pp. 17-19 discloses a method of obtaining caffeine from Turkish tea fiber and stalk wastes.

It is known from GB 893 551 to mechanically separate stem material from leaf material for the purposes of improving the quality of the leaf tea. However in this case the stem is seen as a waste product and is thrown away.

Thus, in a first aspect, the present invention provides a process comprising the steps of harvesting a source of tea plant material comprising stem and leaf material; physically separating the stem material from the leaf material to provide a tea plant source rich in stem; and fermenting and firing the stem material.

In a second aspect, the present invention provides a black tea which comprises at least 50 wt% of stem material.

### DETAILED DESCRIPTION OF THE INVENTION

Herein, the term "stem material" means the elongate tea plant material which is not part of the leaf proper.

The process of the present invention comprises the steps of physically separating stem material from leaf material and then processing the stem material to ultimately obtain the amino acids and other tea solids within in it.

The leaf tea is preferably conventionally processed in a convention black tea manufacturing process, comprising the steps of withering, maceration, fermentation, firing.

### Physical separation

It is preferred that physical separation of leaf and stem occurs as the first step, however it is possible that the physical separation of leaf and stem takes place after withering or even after fermentation.

Separation may be achieved in a number of ways, for example by hand. However it is preferred that this is carried out by a machine, such as that described in GB 893 551. Such a machine may operate by thrashing plucked tea plant material comprising stem and leaf and subsequently using blown air on a falling stream of thrashed material to provide two streams, one rich in stem and the other rich in leaf.

The physical separation step provides a tea plant source rich in stem material, i.e. containing more stem than would be obtained merely by plucking fresh tea.

### Processing the stem material

In the process of the present invention, the stem material is preferably processed as though it were leaf tea. In this way, the stem material is subjected to fermentation and firing to arrest fermentation. Preferably the leaf material is conventionally processed to produce black leaf tea.

In one particular preferred process, the processed stem material is combined with leaf material. This leaf material may be the leaf material which was physically separated from the stem in step (i). In this case, the recombination could occur at any suitable stage in a conventional tea process, but it is preferred that they are recombined once the leaf and the stem have both been processed.

It is preferred that the stem material is treated with a step to alter the physical structure so that it does not physically resemble stem.

It is preferred that the leaf material is also conventionally processed to produce leaf tea.

The treated stem material preferably comprises at least 2wt% theanine.

### Infusion of stem material

In a preferred process, the stem material is infused in water in order to extract the tea solids and amino acids. The stem material is at least fermented before infusion occurs.

Infusions of the stem material may be prepared using either a simple extraction process or an enzymatically assisted extraction process.

The stem material is preferably combined with water in an extractor at the desired temperature to obtain a tea infusion slurry containing extracted tea material and solid tea material. In one preferred process the infusion is carried out in relatively cold water, i.e. less than 50°C. After infusion, the solid tea material is separated from the tea infusion for example by filtration and/or centrifugation.

Enzymatically assisted extraction, if used, requires the addition of enzymes to the extractor in the form of an enzyme cocktail or the enzymes can be fed to the extractor individually. For example, an enzyme cocktail including selected cell wall lysis enzymes such as carbohydrases including cellulase and mascerase, for example, Viscozyme L^{™} obtainable from NOVO Industri A/S Denmark may be used. The tea slurry containing the enzymes is then hot extracted to complete the infusion process and the solid tea materialis separated from the tea extract as above. The tea extract is then preferably pasteurised to deactivate the enzymes.

The resulting tea infusion is then optionally concentrated and then cooled and polished by centrifugation or other clarification methods such as filtration and the like. After polishing, the extract is then concentrated for example by vacuum concentration or by falling film type evaporation and dried for example by spray drying to give tea powder for use in the present invention.

In a preferred embodiment the extract is added to separately processed leaf tea in order to increase the content of tea solids and amino acids in the leaf. If done, this addition of stem tea solids and amino acids is preferably carried out once the leaf tea is in its finally produced black tea state. The leaf tea may be the leaf tea which was mechanically separated from the stem.

### Made tea

The present invention permits a variety of made teas which are high in tea-derived amino acids.

In one aspect of the invention, a tea with elevated levels of stem plant material is provided. Thus, a black tea comprising at least 50 wt% of stem material is possible. Preferably the made black tea has at least 70 wt% stem material, more preferably essentially 100% stem material.

In another aspect the black tea has enhanced levels of tea-derived theanine added onto the leaves.

### EXAMPLES

A sample of plucked tea was obtained from a tea estate in Kenya. The tea was plucked by severing the plant stem just below the fourth leaf from the top to obtain a cut known as "four leaves and a bud". The sample was then physically separated by hand into different categories according to the leaf position and the stem. The leaf and stem material were then analysed for their concentration of theanine, a major component of the available amino acids in tea.

The following results were obtained:

| **Plant material type** | **Theanine conc. Wt%** |
|---|---|
| Bud & 1^{st} leaf | 1.45 |
| 2^{nd} leaf | 1.45 |
| 3^{rd} leaf | 2.15 |
| 4^{th} leaf | 2.40 |
| Bud & 1^{st} and 2^{nd} leaf (young) | 1.90 |
| Bud & 1^{st} and 2^{nd} leaf (mature) | 2.50 |
| Stem above 2^{nd} leaf | 6.80 |
| Stem above 3^{rd} leaf | 7.05 |
| Stem above 4^{th} leaf | 6.10 |
| Stem below 4^{th} leaf | 4.85 |

The stem material was withered, macerated by a CTC (crush-tear-curl) process, then fermented and fired to arrest fermentation, in a conventional black tea process. The resultant fermented stem material was then infused in hot water to provide an amino acid-rich infusion. This was concentrated up and sprayed onto conventional black leaf tea to provide a leaf tea with enhanced levels of amino acids which are entirely naturally sourced from tea.

## Claims

1. A process comprising the steps of:
(i) harvesting a source of tea plant material comprising stem and leaf material;
(ii) physically separating the stem material from the leaf material to provide a tea plant source rich in stem;
(iii) fermenting and firing the stem material.

2. A process as claimed in claim 1, wherein the leaf material is conventionally processed to produce black leaf tea.

3. A process as claimed in any preceding claim, wherein step (iii) is followed by blending the processed stem with leaf material.

4. A process as claimed in claim 3, wherein the leaf material is the leaf material which was physically separated from the stem in step (i).

5. A process as claimed in any preceding claim, wherein the leaf material is conventionally processed to produce leaf tea.

6. A process as claimed in claim 1, wherein step (iii) comprises infusing tea solids from the stem material after fermentation.

7. A process as claimed in claim 6, wherein the extracted stem tea solids are added to leaf tea.

8. A process as claimed in claim 7, wherein the extracted stem tea solids are added to fermented and dried black leaf tea.

9. A process as claimed in any one of claims 6 to 8, wherein the leaf tea to which the tea solids are added comprises tea made from the leaf material which was mechanically separated from the stem material.

10. A process as claimed in any preceding claim, wherein the harvested tea plant material is withered before mechanical separation.

11. A process as claimed in any preceding claim, wherein the treated stem material comprises at least 2wt% theanine.

12. A black tea which comprises at least 50 wt% of stem plant material.

13. A black tea according to claim 12, which comprises at least 70 wt% of stem plant material.

14. A black tea according to claim 13, which comprises essentially 100% stem material.

15. A black tea according to any one of claims 12 to 14, wherein the stem material comprises at least 2 wt% theanine.

## Patentansprüche

1. Verfahren, umfassend die Schritte:
(i) Ernten einer Quelle von Teepflanzenmaterial, umfassend Stängel- und Blattmaterial;
(ii) physikalisches Trennen des Stängelmaterials von dem Blattmaterial unter Bereitstellen einer Teepflanzenquelle, die reich an Stängel ist;
(iii) Fermentieren und Feuern des Stängelmaterials.

2. Verfahren gemäß Anspruch 1, wobei das Blattmaterial in herkömmlicher Weise verarbeitet wird, um schwarzen Blatttee herzustellen.

3. Verfahren, wie es in einem vorangehenden Anspruch beansprucht wird, wobei auf Schritt (iii) ein Mischen des verarbeiteten Stängelmaterials mit Blattmaterial folgt.

4. Verfahren, wie es in Anspruch 3 beansprucht wird, wobei das Blattmaterial das Blattmaterial ist, das in Schritt (i) physikalisch von dem Stängel abgetrennt wurde.

5. Verfahren, wie es in einem vorangehenden Anspruch beansprucht wird, wobei das Blattmaterial in herkömmlicher Weise verarbeitet wird, um Blatttee herzustellen.

6. Verfahren, wie es in Anspruch 1 beansprucht wird, wobei Schritt (iii) Infundieren von Teefeststoffen aus dem Stängelmaterial nach Fermentation umfasst.

7. Verfahren, wie es in Anspruch 6 beansprucht wird, wobei die extrahierten Stängel-Teefeststoffe zu Blatttee gegeben werden.

8. Verfahren, wie es in Anspruch 7 beansprucht wird, wobei die extrahierten Stängel-Teefeststoffe zu fermentiertem und getrocknetem schwarzen Blatttee gegeben werden.

9. Verfahren, wie es in einem der Ansprüche 6 bis 8 beansprucht wird, wobei der Blatttee, zu dem die Teefeststoffe gegeben werden, Tee umfasst, der aus dem Blattmaterial hergestellt ist, das mechanisch von dem Stängelmaterial getrennt wurde.

10. Verfahren, wie es in einem vorangehenden Anspruch beansprucht wird, wobei das geerntete Teepflanzenmaterial vor einer mechanischen Trennung gewelkt wird.

11. Verfahren, wie es in einem vorangehenden Anspruch beansprucht wird, wobei das behandelte Stängelmaterial wenigstens 2 Gewichts-% Theanin umfasst.

12. Schwarzer Tee, der wenigstens 50 Gewichts-% Stängelpflanzenmaterial umfasst.

13. Schwarzer Tee gemäß Anspruch 12, der wenigstens 70 Gewichts-% Stängelpflanzenmaterial umfasst.

14. Schwarzer Tee gemäß Anspruch 13, der im Wesentlichen 100 % Stängelmaterial umfasst.

15. Schwarzer Tee gemäß einem der Ansprüche 12 bis 14, wobei das Stängelmaterial wenigstens 2 Gewichts-% Theanin umfasst.

## Revendications

1. Procédé comprenant les étapes consistant à :
(i) récolter une source de matériau de théier comprenant du matériau de tige et du matériau de feuille ;
(ii) séparer physiquement le matériau de tige du matériau feuille pour fournir une source de théier riche en tige ;
(iii) fermenter et cuire le matériau de tige.

2. Procédé selon la revendication 1, dans lequel le matériau de feuille est classiquement traité pour produire du thé à feuilles noires.

3. Procédé selon l'une quelconque des revendications précédentes, dans lequel l'étape (iii) est suivie du mélange de la tige traitée avec le matériau de feuille.

4. Procédé selon la revendication 3, dans lequel le matériau de feuille est le matériau de feuille qui a été physiquement séparé de la tige à l'étape (i).

5. Procédé selon l'une quelconque des revendications précédentes, dans lequel le matériau de feuille est classiquement traité pour produire du thé à feuilles.

6. Procédé selon la revendication 1, dans lequel l'étape (iii) comprend l'infusion de matières sèches de thé du matériau de tige après fermentation.

7. Procédé selon la revendication 6, dans lequel les matières sèches de thé à tige extraites sont ajoutées au thé à feuilles.

8. Procédé selon la revendication 7, dans lequel les matières sèches de thé à tige extraites sont ajoutées au thé à feuilles noires fermentées et séchées.

9. Procédé selon l'une quelconque des revendications 6 à 8, dans lequel le thé à feuilles auquel sont ajoutées les matières sèches de thé comprend du thé fabriqué à partir du matériau de feuille qui a été mécaniquement séparé du matériau de tige.

10. Procédé selon l'une quelconque des revendications précédentes, dans lequel le matériau de théier récolté est flétri avant séparation mécanique.

11. Procédé selon l'une quelconque des revendications précédentes, dans lequel le matériau de tige traité comprend au moins 2 % en poids de théanine.

12. Thé noir qui comprend au moins 50 % en poids de matériau de plante à tige.

13. Thé noir selon la revendication 12, qui comprend au moins 70 % en poids de matériau de plante à tige.

14. Thé noir selon la revendication 13, qui comprend essentiellement 100 % de matériau de tige.

15. Thé noir selon l'une quelconque des revendications 12 à 14, dans lequel le matériau de tige comprend au moins 2 % en poids de théanine.
